# EUROPEAN PATENT SPECIFICATION

(11) **EP 0 313 030 B1**
(45) Date of publication and mention of the grant of the patent: **31.03.1993**
(21) Application number: 88117422.1
(22) Date of filing: 19.10.1988
(51) Int. Cl.: B60G 17/00

(54) **Height control system in an automotive suspension system performing an attitude change supressive control and height regulating control with high response characteristics in a height adjustment**
Höhenregelungssystem in einer Kraftfahrzeugaufhängung für eine Regelung der Höhe und der Neigungsunterdrückung mit hohem Ansprechverhalten für die Regelung der Höhe
Système de réglage de niveau pour système de suspension automobile à réglage supprimant le changement d'attitude et à correction de hauteur avec une caractéristique de réponse élevée pour la correction de hauteur

(30) Priority: 19.10.1987 JP 265153/87
(43) Date of publication of application: 26.04.1989
(73) Proprietor: NISSAN MOTOR CO., LTD., Yokohama-shi Kanagawa-ken (JP)
(72) Inventor: Kaneko, Akira, Atsugi-shi Kanagawa-ken (JP)
(74) Representative: TER MEER STEINMEISTER & PARTNER GbR

(56) References cited:
- EP-A- 0 161 768
- EP-A- 0 297 736
- PATENT ABSTRACTS OF JAPAN vol. 11, no. 188 (M-599)(2635) 17 June 1987, & JP-A-62 15109 (NISSAN) 23 January 1987,
- PATENT ABSTRACTS OF JAPAN vol. 7, no. 183 (M-235)(1328) 12 August 1983, & JP-A-58 85705 (AISHIN SEIKI) 23 May 1983,
- PATENT ABSTRACTS OF JAPAN vol. 7, no. 133 (M-221)(1278) 10 June 1983, & JP-A-58 49504 (AISIN SEIKI) 23 March 1983,
- SAE Paper no. 840342 1985, Warrendale PA USA pages 2741 - 2753; B.K. CHANCE: "1984 Continental Mark VII/Lincoln Continental Electronically-controlled Air Suspension (EAS) System"

## Description

The present invention relates to a system for controlling the height and the attitude of a vehicle.

A control system having the features of the preamble of claim 1 is known from JP-A-62 15109. In this system either the travel time or the travel distance after a door has been closed and an ignition switch has been turned on is measured. An adjustment of the vehicular height is only provided after the measured time period exceeded a reference time period. The length of this reference time period is selected depending on different circumstances in a way to provide the height adjustment as soon as possible.

Conventional automotive height control systems are provided with pneumatic chambers of variable pneumatic pressure for adjusting a pneumatic spring force to maintain the vehicular height at a predetermined height range. Among such vehicular height control systems, some systems are associated with variable damping force suspension systems which are of variable suspension characteristic for absorbing road shocks and for suppressing vehicular attitude changes.

In such conventional vehicular height control systems, the height adjustment change may cause a temporary vehicular height variation which makes it impossible to obtain precise vehicular height data. It is a normal suspension procedure to give a higher priority for the attitude change suppressing operation than the height regulating operation so that the height adjustment is performed after the vehicular attitude is stabilized. This clearly degrades the response characteristics of the height regulating operation in response to the vehicular height variation due to a change of load, such as upon getting in or getting out of a passenger or passengers because the stability of the vehicular attitude has to be confirmed in advance of the performing height regulating operation.

It is the object of the present invention to provide a height control system with additional attitude control capability, which system has a fast response concerning height adjustments.

The vehicular height control system of the present invention is described by the features of claim 1. This system also detects the time period which has elapsed since a driving cycle started, however, height adjustment is provided, if necessary, within a reference period, and not only after the reference period, as known from JP-A-62 15109. This immediate height control is performed irrespective of the presence or absence of the detection that a vehicular attitude change occurs. Therefore, a course height adjustment can be performed immediately, irrespective of an attitude control performed concurrently.

Preferred embodiments of the invention are described below with reference to the drawings.

In the drawings:
Fig. 1 is a schematic block diagram of a preferred embodiment of a height control system according to the present invention;
Fig. 2 is a flowchart of a vehicular height control program executed by a control unit in the vehicular control system of Fig. 1;
Fig. 3 is a flowchart of another embodiment of a vehicular height control program executed by the control unit; and
Fig. 4 is a chart showing the variation of a period of time in which the vehicular height is to be maintained at the temporarily adjusted level, in relation to a difference of the vehicular height and in consideration of the predetermined height criterion.

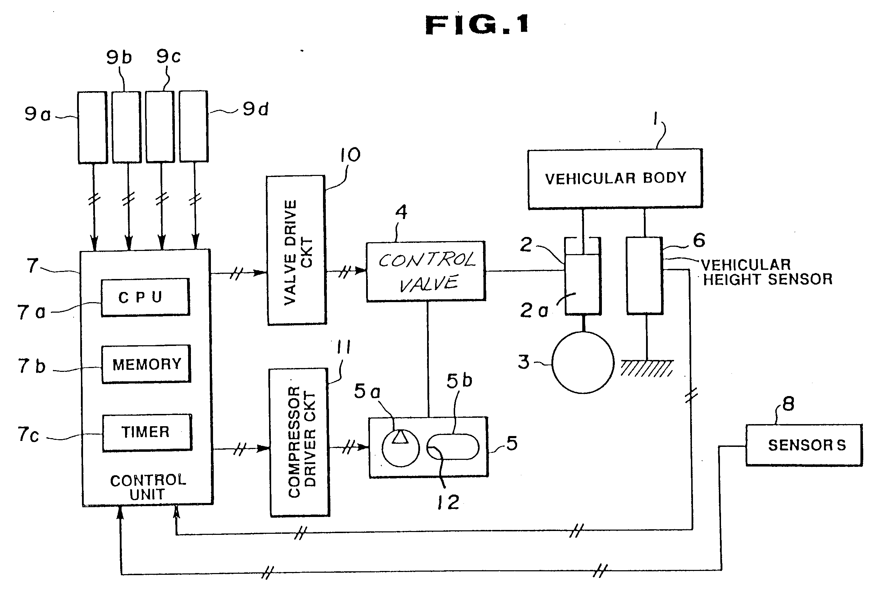

Referring now to the drawings, in particular to Fig. 1, the preferred embodiment of a vehicular height control system, according to the present invention, has a pneumatic cylinder 2 which is disposed between a vehicular body 1 and a suspension member 3 which rotatably supports a road wheel. The pneumatic cylinder 2 has a pneumatic chamber 2a connected to a pneumatic pressure source unit 5 which includes a compressor 5a and a reservoir tank 5b, via a pressure control valve 4. Therefore, by the operation of the pressure control valve 4, pneumatic pressure in the pneumatic pressure chamber 2a is adjusted so as to expand the distance between the vehicular body 1 and the suspension member 3 by increasing the pneumatic pressure and to decrease the distance by decreasing the pneumatic pressure. In order to perform the required pressure adjustment, the pressure control valve 4 may be designed as a three way valve which is variable between an UP mode position in which the pneumatic pressure chamber 2a is communicated with the pressure source unit 5 to introduce the pneumatic pressure for increasing the pneumatic pressure in the pneumatic pressure chamber 2a and a DOWN mode position, in which the pneumatic pressure chamber 2a is exposed to atmosphere to vent the pressurized air or gas for decreasing the pneumatic pressure in the pneumatic pressure chamber 2a, and a SHUT position, in which the pneumatic chamber 2a is closed to maintain the pneumatic pressure substantially constant.

In order to control the operation of the pressure control valve 4, a microprocessor-based control unit 7 is provided. The control unit 7 generally comprises CPU 7a, a memory 7b including RAM and ROM, a timer 7c and an input/output interface 7d. The control unit 7 is connected to a vehicular height sensor 6. The vehicular height sensor 6 may comprise a stroke sensor disposed between the vehicular body 1 and the suspension member 3, as shown in Fig. 1. The stroke sensor may comprise an optical sensor, a magnetic sensor, a strain gauge and so forth. In the alternative, the vehicular height sensor may comprise a sensor which monitors the vehicular height from a road surface. Such a vehicular height sensor may comprise a doppler sensor, an ultrasonic sensor and so forth.

The vehicular height sensor 6 produces a vehicular height indication signal. The control unit 7 is also connected to a plurality of door open detector switches 9a, 9b, 9c and 9d, each of which detects an open condition of an associated one of a vehicular door to produce a HIGH level door condition indication signal. The control unit 7 is further connected to vehicular attitude monitoring sensors which are generally represented by the reference numeral 8.

The attitude monitoring sensors 8 may be constituted of a rolling sensor, a pitching sensor and the like. The rolling sensor may comprise a vehicle speed sensor and a steering angle sensor for detecting the magnitude of rolling. The rolling sensor may also comprise a lateral acceleration sensor. On the other hand, the pitching sensor may comprise a braking state and thereby detecting a vehicular decelerating condition, a longitudinal acceleration sensor, a fuel injection pulse sensor which counts the fuel injection pulses for detecting the acceleration and the deceleration of an automotive engine and thereby detecting the acceleration and the decelaration of the vehicle.

Since the kind of sensor or sensors for monitoring the vehicle driving parameter or parameters affecting the vehicle body attitude is not essential to the shown embodiment of the vehicular height control system, those sensors will be generally referred to as the vehicular attitude monitoring sensors 8. The sensor signals produced by the vehicular attitude monitoring sensors 8 and representative of the vehicular attitude will be hereafter referred to as vehicular attitude indication signals.

The control unit 7 is further connected to a compressor driver circuit 11 and a pressure control valve driver circuit 10. The control unit 7 is further connected to a pressure sensor 12 for monitoring the pneumatic pressure in the reservoir tank 5b of the pressure source unit 5 to produce a pressure indication signal. The control unit 7 is responsive to the pressure indication signal value if it is smaller than or equal to a predetermined low pressure criterion to produce a compressor control signal. The compressor control signal is fed to the compressor driver circuit 11. The compressor driver circuit 11 is responsive to the compressor control signal to drive the compressor 5a to incrase the pressure in the reservoir tank 5b.

It should be noted that though the shown embodiment is designed to drive the compressor 5a when the pneumatic pressure in the reservoir tank 5b becomes lower than or equal to the low pressure criterion. It is possible to drive the compressor 5a whenever the pressure control valve 4 is operated into the UP mode position. In such case, the pressure sensor 12 in the reservoir tank 5b is not necessary.

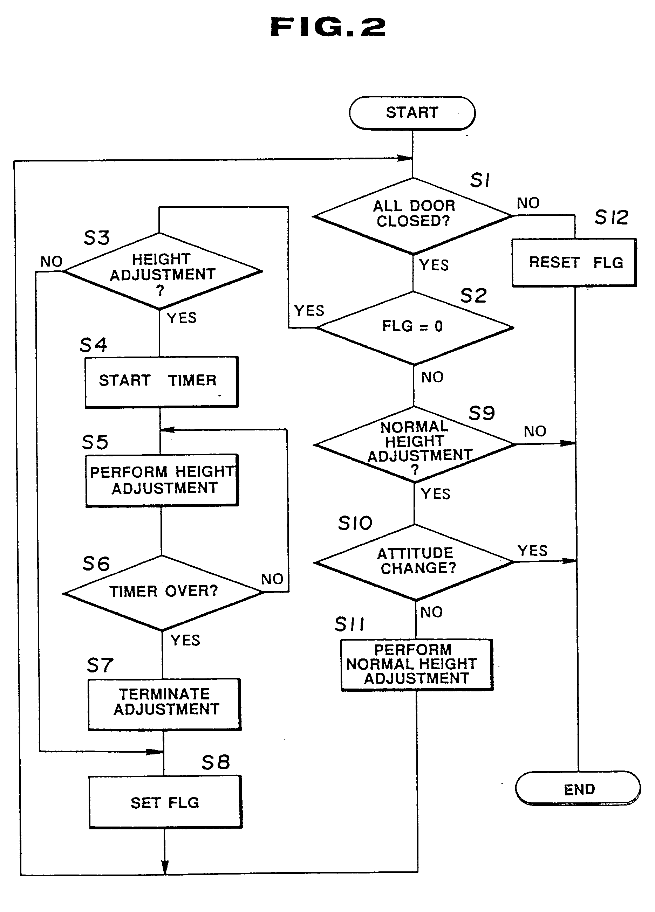

A practical vehicular height control operation performed by the suspension control system described above will be discussed herebelow with reference to Figs. 2 to 4.

Fig. 2 shows a height control program executed by the control unit 7 in the preferred embodiment of the height control system of Fig. 1.

Immediately after starting execution of the program, the door condition indication signal from the door open detector switches 9a, 9b, 9c and 9d are checked at a step S1. This stage is provided for detecting the opening of a door. In the shown embodiment, the system recognizes that the load on the vehicle will be increased by boarding of one or more passengers at a first occurrence of a HIGH level door condition indication signal and that the load on the vehicle will be decreased by unboarding or getting off of one or more passengers at a second occurrence of the HIGH level door condition indication signal.

If any one of the door condition indication signals of the door open detector switches 9a, 9b, 9c and 9d are detected at the step S1, the process goes to a step S12 to reset a load change transition indication flag FLG. Thereafter, process goes to END.

On the other hand, when all of the door condition indication signals of the door open detector switches 9a, 9b, 9c and 9d are maintained at a LOW level as checked at the step S1, the load change transition state indication flag FLG is checked at a step S2. When the load change transition indicated flag FLG is not set as checked at the step S2, the vehicular height indication signal value is then checked to detect the vehicular height level at a step S9. Namely, at the step S9, the vehicular height indication signal value is compared with an upper threshold value representative of an upper limit of a predetermined normal state height range and a lower threshold representative of a lower limit of the predetermined normal state vehicular height range.

It should be noted that the aforementioned normal state height range is set in relation to a predetermined target height and defined by the aforementioned upper and lower limit with taking the target height as the center value.

When the vehicular height indication signal value is smaller than or equal to the upper threshold and greater than or equal to the lower threshold, the process goes to END. On the other hand, when the vehicular height indication signal value is greater than the upper threshold or smaller than the lower threshold, the vehicular attitude indication signal is checked at a step S10. When the vehicular attitude indication signal as checked at the step S10 indicates the vehicular attitude change, the process goes END. When the vehicular attitude indication signal as checked at the step S10 indicates that the vehicular attitude is unchanged the height adjustment is performed by supplying the height control signal to the pressure control valve driver circuit 10 at a step S11. Namely, when the vehicular height indication signal is greater than the upper threshold, the control signal serves as a DOWN command ordering a DOWN mode position of the pressure control valve 10. On the other hand, when the vehicular height indication signal value is smaller than the lower threshold, the control signal serves as an UP command ordering an UP mode position of the pressure control valve 10. After the step S11 the process returns to the step S1.

When the load change transition indication flag FLG is not set as checked at the step S2, the vehicular height indication signal value is compared with an upper criterion which defines an upper limit of a predetermined transition state height range and a lower criterion which defines a lower limit of the transition state height range. The transition state height range is broader than the normal state height range.

When the vehicular height indication signal value is grater than the upper criterion or smaller than the lower criterion as checked at the step S3, the timer 7c is triggered to start the measurement of an elapsed time. Then the transition state height adjustment is performed at a step S5 to adjust the vehicular height within the transition state height range. In the transition state height adjustment the vehicular height is adjusted toward the upper or lower limit of the transition state height range. Namely, when the vehicular height is higher than the upper limit the control signal serving as the DOWN command is supplied to operate the pressure in the pneumatic chamber 2a. The DOWN mode ordering control signal is maintained until the vehicular height becomes lower than or equal to the upper limit of the transition state height range. On the other hand, when the vehicular height is lower than the lower limit, the control signal serving as the UP command is produced to operate the pressure control valve 10 to the UP mode position. Thereby, the pressure is increased by the pneumatic pressure source unit 5 to rise the vehicular height. The UP mode ordering control signal is terminated when the vehicular height increases across the lower limit of the transition state height range.

Thereafter, the timer value of the timer 7c as triggered at the step S4 is checked at a step S6. When the timer value is smaller than a predetermined value representative of a predetermined period of time in which the transition state height adjustment is to be performed, the process returns to the step S5. On the other hand, when the timer value becomes grater than or equal to the predetermined value as checked at the step S6, the transition state height adjustment is terminated at a step S7 irrespective of the vehicular height position. Namely, when the time over is detected at the step S6, the transition state height adjustment is terminated even when the vehicular height is still out of the transition state height range.

After the process of the step S7, or when the vehicular height indication signal value is smaller than or equal to the upper criterion and greater than or equal to the lower criterion, the load change transition indication flag FLG is set at a step S8 to indicate that the state of the height control is not in the load change transition state. Thereafter, the process returns to the step S1.

In the preferred height control process set forth above, the timer 7c is designed to detect the fixed transition state height adjustment period so that the transition state height adjustment is performed within the fixed period. However, it may be possible to vary the transition state height adjustment period so that the transition state height adjustment can be completed within the period of time while the transition state height adjustment is active.

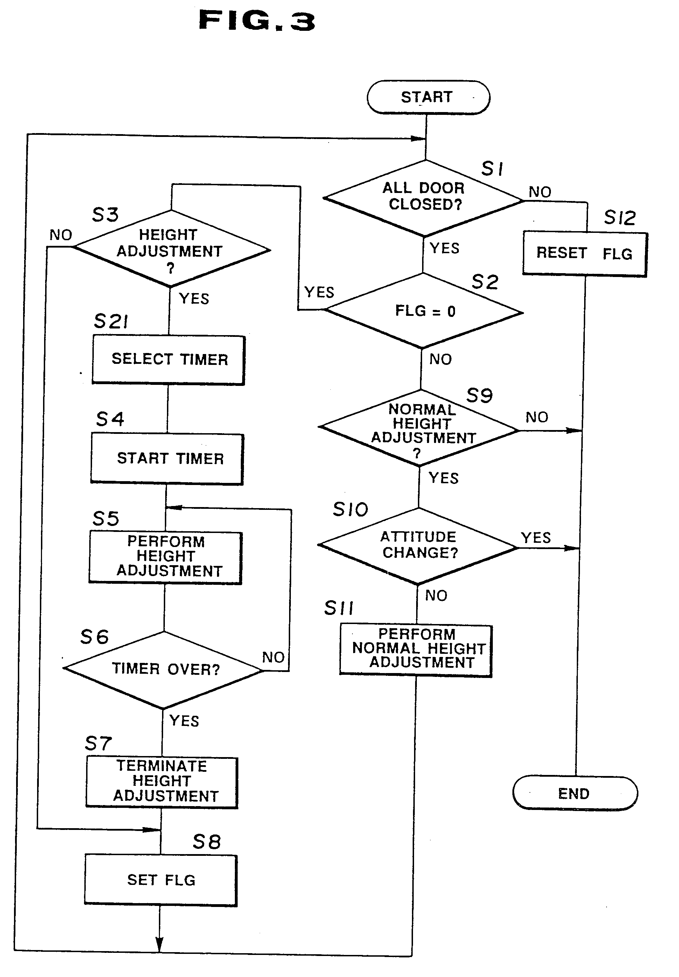

Fig. 3 shows a modification of the height control program of Fig. 2. In the modified routine of Fig. 3 the feature of an adjustment of the transition state height adjustment period depending upon the height difference between the actual vehicular height and the upper or lower limit of the transition state height range is introduced.

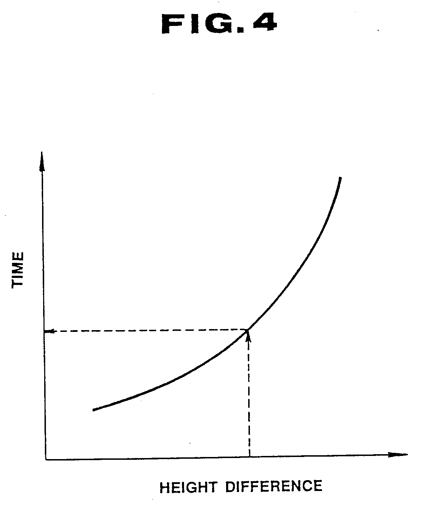

In order to introduce a height difference dependent variable transition state height adjustment period, a step S21 is added between the steps S3 and S4. In the step S21, a height difference from an adjacent one of the upper and the lower limit of the transition state height range is derived. Based on the derived height difference, the timer set value which is representative of the transition state height adjustment period, is determined according to the characteristics shown in Fig. 4.

By introducing this feature, it can be assured to complete the transition state height adjustment whithin the period, in which the transition state height adjustment is active.

While the present invention has been disclosed in detail in terms of the preferred embodiment of the invention, the invention can be implemented in various ways. For example, though the shown embodiment employs pneumatic cylinders for adjusting the vehicular height, it may be possible to use hydraulic or hydropneumatic cylinders for adjusting the height level of the vehicular body. When hydraulic cylinders are used for the height adjustment, the pressure chamber in the hydraulic cylinder is to be connected to a hydraulic pressure source. Furthermore, though the shown embodiment employs the vehicular height sensor for monitoring the vehicular height level, a vertical acceleration sensor monitoring the vehicle body acceleration in a vertical direction can be employed in place of the vehicular height sensor for detecting a vertical displacement of the vehicular height. In such case, the vertical height position may be derived by integrating the vertical acceleration indication signal values.

## Claims

1. A vehicular height control system for a vehicle comprising:
a) vehicular height adjusting means (2, 3, 4, 5, 10, 11) for adjusting the height of a vehicular body (1) with respect to ground in response to a control signal input thereto;
b) vehicular height sensing means (6) for detecting the actual vehicular height of the vehicular body (1); and
c) drive control means (7) for comparing the actual vehicular height detected by the vehicular height sensing means with a reference height of the vehicular body and producing the control signal for the vehicular height adjusting means so that the height of the vehicular body is adjusted toward the reference vehicular height,
**characterized in that**
the vehicular height control system further includes
- vehicular attitude change sensing means (8) for detecting the change in attitude of the vehicular body (1) so that the drive control means (7) produces the control signal for the vehicular height adjusting means so that the vehicular body height is adjusted to coincide with the reference vehicular height (R2) when the vehicular attitude change sensing means (8, S10) does not detect the change in posture of the vehicular body,
- cycle detecting means (Figs. 2 and 3) for detecting a start of one cycle from the vehicular driver's getting on the vehicle to the vehicular driver's getting off the vehicle via the vehicle run; time measuring means (7c, Figs. 2 and 3 (S4, S7)) for measuring a predetermined period of time; and determining means (7, Figs. 2 and 3) for determining whether the actual vehicular height is outside of another reference height (R1),
and in that
- said drive control means (7, Figs. 2, and 3 (S5)) produces the control signal so that the vehicular height is forcefully adjusted to coincide with the other reference height (R1) through the vehicular height adjusting means (2, 3, 4, 5, 10, 11) only for the predetermined period of time when the cycle detecting means detects the start of one cycle and when the actual vehicular height is outside of the other reference vehicular height (R2), irrespective of the presence or absence of the detection that a vehicular attitude change occurs.

2. An automotive height control system as set forth in claim 1, wherein said third detector means comprises a door switch (9a-d) which turns ON in response to the opening of a door.

3. An automotive height control system as set forth in claim 1, wherein said controlling means (7) is active in the load change transition mode for a predetermined period of time as triggered by said third sensor signal.

4. An automotive height control system as set forth in claim 3, wherein said controlling means (7) derives the predetermined period of time on the basis of a difference between the first sensor signal value and a criterion defining the predetermined second height range.

5. An automotive height control system as set forth in claim 1, wherein said first sensor means (6) is designed to monitor a relative distance between said vehicular body (1) and said suspension member (3) for producing said first sensor signal indicative of the relative distance as a vehicle height level indicative data.

## Patentansprüche

1. Fahrzeughöhenregelungssystem für ein Fahrzeug mit:
a) einer Höheneinstelleinrichtung (2, 3, 4, 5, 10, 11) zum Einstellen der Höhe eines Fahrzeugkörpers (1) in bezug auf den Boden in Abhängigkeit von einem eingegebenen Steuersignal;
b) einer Einrichtung (6) zum Erfassen der aktuellen Fahrzeughöhe des Fahrzeugkörpers (1); und
c) einer Antriebssteuereinrichtung (7), welche die festgestellte tatsächliche Fahrzeughöhe mit einer Bezugshöhe des Fahrzeugkörpers vergleicht und ein Steuersignal für die Fahrzeughöheneinstelleinrichtung derart bereitstellt, daß die Höhe des Fahrzeugkörpers zur Bezugsfahrzeughöhe hin eingestellt wird;
**dadurch gekennzeichnet,** daß das Fahrzeughöhenregelungssystem ferner folgendes aufweist:
- eine Einrichtung (8), die eine Lageänderung des Fahrzeugkörpers (1) feststellt, so daß die Antriebssteuereinrichtung (7) das Steuersignal für die Fahrzeughöheneinstelleinrichtung erzeugt, und die Höhe des Fahrzeugkörpers in solcher Weise eingestellt wird, daß sie mit der Bezugsfahrzeughöhe (R2) übereinstimmt, wenn die Einrichtung (8, S10), welche Fahrzeuglageänderungen erfaßt, keine Änderung in der Lage des Fahrzeugkörpers feststellt;
- einen Zyklusdetektor (Fig. 2 und 3), der den Beginn eines Zyklus ab dem Zeitpunkt feststellt, zu dem der Fahrer in das Fahrzeug einsteigt, bis zum Zeitpunkt, zu dem der Fahrer das Fahrzeug nach einer Fahrt verläßt;
- eine Zeitmeßeinrichtung (7c, Fig. 2 und 3 (S4, S7)) zum Messen einer vorgegebenen Zeitspanne;
- und eine Bestimmungseinrichtung (7, Fig. 2 und 3) zum Bestimmen, ob die aktuelle Fahrzeughöhe außerhalb einer anderen Bezugshöhe (R1) liegt;
- und daß die Antriebssteuereinrichtung (7, Fig. 2 und 3 (S5)) ein Steuersignal in solcher Weise erzeugt, daß die Fahrzeughöhe zwangsweise durch die Fahrzeughöheneinstelleinrichtung (2, 3, 4, 5, 10, 11) so eingestellt wird, daß sie für die vorgegebene Zeitspanne mit der anderen Bezugshöhe (R1) übereinstimmt, wenn der Zyklusdetektor den Beginn eines Zyklus erfaßt und wenn die tatsächliche Fahrzeughöhe außerhalb der anderen Bezugsfahrzeughöhe (R2) liegt, unabhängig davon, ob eine Fahrzeuglageänderung festgestellt wurde.

2. Fahrzeughöhenregelungssystem nach Anspruch 1, bei dem die dritte Erfassungseinrichtung einen Türschalter (9a - d) aufweist, der beim Öffnen einer Tür eingeschaltet wird.

3. Fahrzeughöhenregelungssystem nach Anspruch 1, bei dem die Steuereinrichtung (7) in der Übergangszeitspanne einer Beladungsänderung für eine vorgegebene, durch das dritte Sensorsignal getriggerte Zeitspanne aktiv ist.

4. Fahrzeughöhenregelungssystem nach Anspruch 3, bei dem die Steuereinrichtung (7) die vorgegebene Zeitspanne auf Grundlage einer Differenz zwischen dem Wert des ersten Sensorsignals und einem Kriterium bestimmt, das den vorgegebenen zweiten Höhenbereich festlegt.

5. Fahrzeughöhenregelungssystem nach Anspruch 1, bei dem die erste Sensoreinrichtung (6) die Relativentfernung zwischen dem Fahrzeugkörper (1) und einem Aufhängungsteil (3) überwacht, und das erste Sensorsignal als das Fahrzeughöhenniveau anzeigenden Datenwert ausgibt.

## Revendications

1. Système de réglage de la hauteur véhiculaire pour un véhicule comprenant :
a) des moyens de réglage de la hauteur véhiculaire (2,3,4,5,10,11) pour régler la hauteur d'une caisse de véhicule (1) relativement au sol, en réponse à un signal de commande entré dans ceux-ci;
b) des moyens captant la hauteur véhiculaire (6) pour détecter la hauteur véhiculaire actuelle de la caisse de véhicule (1); et
c) des moyens de réglage d'entraînement (7) pour comparer la hauteur véhiculaire actuelle détectée par les moyens captant la hauteur véhiculaire, avec une hauteur de référence de la caisse de véhicule, et pour produire un signal de commande pour les moyens de réglage de la hauteur véhiculaire, de sorte que la hauteur de la caisse de véhicule est réglée vers la hauteur véhiculaire de référence,
caractérisé en ce que le système de réglage de la hauteur véhiculaire comprend en outre
- des moyens (8) captant un changement de l'attitude du véhicule pour détecter le changement d'attitude de la caisse de véhicule (1), de façon que les moyens de réglage d'entraînement (7) produisent le signal de commande pour les moyens de réglage de la hauteur véhiculaire, de sorte que la hauteur de la caisse de véhicule est réglée pour coïncider avec la hauteur véhiculaire de référence (R2) lorsque les moyens (8, S10) captant un changement dans l'attitude du véhicule ne détectent pas le changement d'attitude de la caisse de véhicule,
- des moyens de détection de cycle (figures 2 et 3) pour détecter le démarrage d'un cycle depuis la montée du conducteur du véhicule dans le véhicule à la sortie du conducteur du véhicule du véhicule, via la marche du véhicule; des moyens de mesure de temps (7c, figures 2 et 3 (S4, S7)) pour mesurer une période de temps prédéterminée; et des moyens de détermination (7, figures 2 et 3) pour déterminer si la hauteur véhiculaire actuelle se situe en-dehors d'une autre hauteur de référence (R1),
- et en ce que lesdits moyens de réglage d'entraînement (7, figures 2 et 3 (S5)) produisent le signal de réglage de sorte que la hauteur véhiculaire est ajustée de force pour coïncider avec l'autre hauteur de référence (R1) à travers les moyens de réglage de la hauteur véhiculaire (2, 3, 4, 5, 10, 11) seulement pendant la période de temps prédéterminée, lorsque les moyens de détection de cycle détectent le démarrage d'un cycle et lorsque la hauteur véhiculaire actuelle se situe en-dehors de l'autre hauteur véhiculaire de référence (R2), sans tenir compte de la présence ou de l'absence de la détection qu'un changement d'attitude du véhicule se produit.

2. Système de réglage de hauteur d'automobile selon la revendication 1, dans lequel lesdits troisièmes moyens détecteurs comprennent un commutateur de porte (9a-d) qui se met sur la position EN SERVICE, en réponse à l'ouverture d'une porte.

3. Système de réglage de la hauteur d'automobile selon la revendication 1, dans lequel lesdits moyens de réglage (7) sont actifs en mode de transition de changement de charge pour une période de temps prédéterminée, telle que déclenchée par ledit troisième signal formant capteur.

4. Système de réglage de la hauteur d'automobile selon la revendication 3, dans lequel lesdits moyens de commande (7) obtiennent la période de temps prédéterminée sur la base d'une différence entre la première valeur du signal du capteur et un critère définissant la deuxième plage de hauteur prédéterminée.

5. Système de réglage de la hauteur d'automobile selon la revendication 1, dans lequel ledit premier moyen formant capteur (6) est destiné à surveiller une distance relative entre ladite caisse de véhicule (1) et ledit élément de suspension (3) pour produire ledit premier signal du capteur indiquant la distance relative en tant que donnée indiquant le niveau de hauteur du véhicule.
